# EUROPÄISCHE PATENTSCHRIFT

(11) **EP 3 488 506 B1**
(45) Veröffentlichungstag und Bekanntmachung des Hinweises auf die Patenterteilung: **22.04.2020**
(21) Anmeldenummer: 17758800.1
(22) Anmeldetag: 19.07.2017
(51) Int. Cl.: H01S 3/23, H01S 3/06, G02B 7/182

(54) **OPTISCHE ANORDNUNG MIT SCHEIBENFÖRMIGEM LASERAKTIVEN MEDIUM**
OPTICAL ASSEMBLY WITH DISC-SHAPED LASER-ACTIVE MEDIUM
AGENCEMENT OPTIQUE PRÉSENTANT UN MOYEN EN FORME DE DISQUE ACTIVÉ PAR LASER

(30) Priorität: 25.07.2016 DE 102016213561
(43) Veröffentlichungstag der Anmeldung: 29.05.2019
(73) Patentinhaber: TRUMPF Laser GmbH, 78713 Schramberg (DE)
(72) Erfinder: BAUER, Dominik, 78628 Rottweil (DE); KILLI, Alexander, 78647 Trossingen (DE); SCHAD, Sven-Silvius, 78628 Rottweil (DE)
(74) Vertreter: Kohler Schmid Möbus Patentanwälte
(86) Internationale Anmeldenummer: PCT/EP2017/068199
(87) Internationale Veröffentlichungsnummer: WO 2018/019674

(56) Entgegenhaltungen:
- EP-A1- 2 284 965
- EP-A2- 2 031 712
- WO-A1-2015/074244
- US-A1- 2005 030 656
- US-A1- 2012 155 503
- US-B2- 7 817 704

## Beschreibung

Die vorliegende Erfindung betrifft eine optische Anordnung, beispielsweise eine optische Verstärkeranordnung, insbesondere einen (linearen) Scheibenlaserverstärker, umfassend: ein scheibenförmiges laseraktives Medium, eine Umlenkeinrichtung mit mehreren Spiegelelementen, an denen Spiegelflächen zur Umlenkung eines zu verstärkenden Laserstrahls gebildet sind, sowie mit einem Grundkörper, an dem die Spiegelelemente befestigt sind, wobei die Spiegelflächen der Spiegelelemente derart ausgerichtet sind, dass der zu verstärkende Laserstrahl von einer jeweiligen Spiegelfläche über das scheibenförmige laseraktive Medium zu einer anderen Spiegelfläche umgelenkt wird, wobei die Spiegelelemente einteilig ausgebildet oder monolithisch gefügt sind und einen bevorzugt rotationssymmetrisch zur einer Mittelachse ausgebildeten Verbindungsabschnitt aufweisen, der entweder über eine stoffschlüssige Verbindung oder eine direkte Verbindung fest, d.h. dauerhaft, mit dem Grundkörper verbunden ist. Die Spiegelelemente sind somit in Paaren angeordnet, zwischen deren Spiegelflächen der Laserstrahl über das scheibenförmige laseraktive Medium umgelenkt wird.

Eine solche optische Anordnung ist beispielsweise in der EP 2 284 965 A1 beschrieben.

In dem Artikel "Thin-Disk Yb:YAG Oscillator-Amplifier Laser, ASE, and Effective Yb:YAG Lifetime" von A. Antognini et al., IEEE Journal of Quantum Electronics, Vol. 45, No. 8, Seiten 993-1005, August 2009 wird ein Multipass-Scheibenlaserverstärker beschrieben, bei dem ein Array aus 24 Planspiegeln verwendet wird, um den Laserstrahl zur Laserscheibe umzulenken. Die Spiegel sind auf einer gemeinsamen Grundplatte angeordnet und die Orientierung jedes einzelnen Spiegels kann individuell verändert werden, um bei jedem Durchgang des Laserstrahls durch die Laserscheibe dessen Strahlverlauf individuell anzupassen. Auch in dem Artikel "High-repetition-rate chirped-pulse-amplification thin-disk laser system with joule-level pulse energy", von J. Tümmler et al., Optics Letters, Vol. 34, No. 9, Seiten 1378 -1380, 1. Mai 2009, wird ein Multipass-Verstärker beschrieben, bei dem ein Array von 7 x 4 Spiegeln zur Umlenkung des Laserstrahls verwendet wird, wobei die Spiegel ebenfalls auf einer gemeinsamen Grundplatte angeordnet sind und individuell justiert werden können.

Aus der US 7,463,667 B2 ist ein Lasersystem mit einem Festkörperlaser-Verstärkermaterial-Modul (LGM-Modul) sowie mit einem Multipass-Resonator bekannt geworden, der eine Mehrzahl von Paaren von Relay-Spiegeln mit jeweils einem ersten und einem zweiten Spiegel aufweist. Der Laserstrahl wird zwischen ein- und derselben Stelle auf dem LGM-Modul und jedem Paar der Mehrzahl von Paaren von Relay-Spiegeln hin- und her reflektiert. Das LGM-Modul und der Resonator sind in einem Resonator-Gehäuse untergebracht und die Mehrzahl von Spiegeln ist in einer Halterungsanordnung gehalten, welche die Ausrichtung und die Positionierung der Spiegel relativ zueinander und zu dem LGM-Modul aufrechterhält, um zu erreichen, dass der Laserstrahl korrekt zwischen den Spiegelpaaren und dem LGM-Modul hin- und her reflektiert wird.

Optische Verstärkeranordnungen in Form von Scheibenlaserverstärkern oder von Scheibenlasern weisen ein scheibenförmiges laseraktives Medium mit geringer Dicke (Laserscheibe) auf. In einer solchen optischen Anordnung in Form eines linearen Scheibenlaserverstärkers, d.h. eines Laserverstärkers, bei dem keine Rückkopplung über einen Resonator erfolgt, wie dies bei einem regenerativen Verstärker der Fall ist, soll ein Laserstrahl zu höheren Leistungen und im Fall von gepulster Strahlung zu höheren Pulsenergien verstärkt werden. Die vergleichsweise niedrige Verstärkung bei einem Durchgang durch die Laserscheibe erfordert typischer Weise eine hohe Anzahl an Durchgängen durch die Laserscheibe. Diese hohe Anzahl an Durchgängen wird häufig mit einem vergleichsweise langen Strahlweg realisiert. Lineare Scheibenverstärker eignen sich besonders zur Skalierung im Hochleistungsbereich und Kurz- beziehungsweise Ultrakurzpulsbereich, da durch große Strahldurchmesser im gesamten Scheibenlaserverstärker niedrige Intensitäten und Nichtlinearitäten bei nur geringen optischen Aberrationen erreicht werden können. Aufgrund der langen Strahlwege und der vergleichsweise großen Zahl der optischen Komponenten zur Realisierung der Durchgänge durch die Laserscheibe ist eine optische Verstärkeranordnung in Form eines Scheibenlaserverstärkers jedoch sensitiv in Bezug auf Dejustage.

In der US 7,817,704 B2 ist ein Monoblock-Laser beschrieben, der eine entlang seiner Achse verlaufende Auflage aufweist, auf der ein justierbares, um die Achse drehbares Element aufliegt. Das justierbare Element kann in einer als V-Block ausgebildeten Auflage drehbar gelagert sein. Alternativ kann das justierbare Element, beispielsweise in Form eines Spiegels, einen sphärisch geformten Boden aufweisen und das Substrat der Auflage kann eine sphärisch geformte Ausnehmung zur Aufnahme des justierbaren Elements umfassen.

Aus der EP 2 816 386 A1 ist eine Optikanordnung mit einem Optikelement bekannt geworden, das über mindestens ein Halteelement an einen Grundkörper angeklebt ist, wobei das Optikelement über eine optikelementseitig gekrümmte Fügeseite und/oder eine halteelementseitig gekrümmte Fügeseite entlang einer Kontaktlinie unmittelbar aneinander anliegen und mittels eines Klebstoffs verklebt sind, der in mindestens eine neben der Kontaktlinie zwischen den Fügeseiten vorhandene Fuge eingebracht ist.

In der WO 2012/013512 A1 ist eine Optikanordnung mit einer Grundplatte beschrieben, die eine Vertiefung mit einer einen Auflagebereich aufweisenden Wandung umfasst, sowie einen Optikhalter, der ein optisches Element haltert und der eine Unterseite mit einem Kontaktbereich aufweist. Zwischen der Unterseite des Optikhalters und dem Boden der Vertiefung ist ein Hohlraum gebildet, in dem ein aushärtbares Klebemittel eingefüllt ist, das zur Fixierung des Optikhalters dient. Durch zusätzliches Löten oder Punktschweißen bzw. Punktlaserschweißen kann eine Verbesserung der Fixierung des Optikhalters realisiert werden.

### Aufgabe der Erfindung

Der Erfindung liegt die Aufgabe zugrunde, eine optische Anordnung, insbesondere in Form eines (linearen) Scheibenlaserverstärkers, bereitzustellen, bei dem ein geringes Risiko für eine Dejustage besteht.

### Gegenstand der Erfindung

Diese Aufgabe wird erfindungsgemäß gelöst durch eine optische Anordnung der eingangs genannten Art, beispielsweise in Form einer optischen Verstärkeranordnung, insbesondere in Form eines Scheibenlaserverstärkers, bei welcher in dem Grundkörper Ausnehmungen gebildet sind, die jeweils eine Mantelfläche zur stoffschlüssigen oder zur direkten Verbindung mit dem Verbindungsabschnitt eines jeweiligen Spiegelelements aufweisen, bei welcher der Verbindungsabschnitt durch ein Kugelsegment gebildet ist und bei welcher das Kugelsegment an einer Kugelkalotte des Kugelsegments stoffschlüssig oder direkt mit der Mantelfläche der Ausnehmung des Grundkörpers verbunden ist.

Bei der erfindungsgemäßen optischen Anordnung sind in dem Grundkörper Ausnehmungen gebildet, die jeweils eine Mantelfläche zur stoffschlüssigen oder direkten Verbindung mit dem Verbindungsabschnitt eines jeweiligen Spiegelelements aufweisen. Bei dieser Ausführungsform werden die Spiegelelemente, genauer gesagt deren Verbindungsabschnitte, in die Ausnehmungen eingesetzt, so dass diese punktuell, linienförmig oder ggf. flächig an der Mantelfläche einer jeweiligen Ausnehmung anliegen. Die Ausnehmungen können in einem Grundkörper in Form einer Grundplatte mit im Wesentlichen konstanter Dicke gebildet sein. Es ist aber auch möglich, dass die Ausnehmungen in Erhebungen bzw. Verdickungen des Grundkörpers gebildet sind, d.h. es ist nicht zwingend erforderlich, dass die Ausnehmungen gegenüber dem restlichen Grundkörper, z.B. in der Form einer Grundplatte, zurückgesetzt sind.

Bei der erfindungsgemäßen optischen Anordnung ist der Verbindungsabschnitt durch ein Kugelsegment gebildet und das Kugelsegment ist an einer Kugelkalotte des Kugelsegments, d.h. an einer sphärisch gekrümmten Oberfläche des Kugelsegments, stoffschlüssig oder direkt mit der Mantelfläche der Ausnehmung des Grundkörpers verbunden. Die Verwendung von kugelförmigen Verbindungsabschnitten hat sich als vorteilhaft erwiesen, da diese die Justage bzw. die Ausrichtung der Spiegelelemente in den Ausnehmungen stark vereinfacht und bei einer geeigneten, rotationssymmetrischen Ausbildung der Mantelfläche ein linien- bzw. kreisförmiger Kontakt erreicht werden kann.

Unter monolithisch gefügten Spiegelelementen werden im Sinne dieser Anmeldung Spiegelelemente verstanden, die aus mehreren Bauteilen gebildet sind, die fest und dauerhaft miteinander verbunden sind, wobei die Verbindung zwischen den Bauteilen des Spiegelelements ebenfalls durch eine stoffschlüssige Verbindung oder durch eine direkte Verbindung erfolgt.

Typischer Weise werden Spiegelelemente in einem Spiegelhalter mit einstellbarer Taumelplatte gehaltert. Diese erlaubt eine präzise Ausrichtung eines jeweiligen Spiegelelements, genauer gesagt der Spiegelfläche, mit einer Genauigkeit im Bereich von z.B. ca. 10 µrad. Eine Umlenkeinrichtung, welche eine Mehrzahl von derartigen Spiegelhaltern aufweist und welche zur Realisierung eines Scheibenmultipassverstärkers genutzt werden kann, wie dies bei den beiden weiter oben zitierten Artikeln der Fall ist, bietet jedoch eine große Anzahl an Justagefreiheitsgraden mit erheblichem Dejustage- und Montagerisiko.

Dieses Risiko wird durch fest, d.h. dauerhaft, mit dem Grundkörper, beispielsweise in Form einer Grundplatte, verbundene Spiegelelemente minimiert. Durch die dauerhafte Verbindung können die Dejustagefreiheitsgrade auf ein Minimum reduziert werden und es können Dejustagen im Betrieb der optischen Anordnung praktisch ausgeschlossen werden. Um die Dejustagefreiheitsgrade zu minimieren, werden die Spiegelelemente entweder durch eine stoffschlüssige Fügetechnik, z.B. durch Kleben, Löten oder Schweißen, oder durch direktes, dauerhaftes Verbinden, z.B. durch Bonden oder Glasschweißen, an dem Grundkörper befestigt bzw. mit diesem verbunden. Zudem sind die Spiegelelemente entweder einteilig ausgebildet oder monolithisch gefügt. Die Spiegelelemente, genauer gesagt die Spiegelflächen der Spiegelelemente sollten typischer Weise mit einer Genauigkeit von etwa 10 µrad dauerstabil an dem Grundkörper montiert bzw. relativ zu diesem ausgerichtet werden. Der Grundkörper ist bevorzugt einteilig ausgebildet, kann aber ggf. ebenfalls monolithisch gefügt sein.

Bei einer Ausführungsform sind die Spiegelflächen der Spiegelelemente plan und unter einem Winkel zwischen 30° und 60°, bevorzugt zwischen 35° und 55°, insbesondere zwischen 40° und 50°, zu einer Mittelachse des Verbindungsabschnitts ausgerichtet, der rotationssymmetrisch zu der Mittelachse ausgebildet ist. Die Normalenrichtungen der Spiegelflächen der Spiegelelemente der Umlenkeinrichtung müssen einerseits derart gewählt werden, dass eine direkte Umlenkung zu einer jeweiligen weiteren Spiegelfläche erfolgen kann und andererseits auf eine solche Weise, dass die Laserscheibe typischer Weise mittig von dem Laserstrahl getroffen wird. Zu diesem Zweck kann bei der Montage eines jeweiligen Spiegelelements an dem Grundkörper die Mittelachse eines jeweiligen Verbindungsabschnitts unter einem geeigneten Winkel zum (plattenförmigen) Grundkörper ausgerichtet werden. Insbesondere können zu diesem Zweck die Mittelachsen der Verbindungsabschnitte von unterschiedlichen Spiegelelementen in Bezug auf den Grundkörper unterschiedlich ausgerichtet werden. In diesem Fall können ggf. alle Spiegelelemente der Umlenkeinrichtung, die in einem Kreisring (s.u.) angeordnet sind, unter ein- und demselben Winkel zur Mittelachse des Verbindungsabschnitts ausgerichtet sein, so dass nur ein einziger Typ von Spiegelelementen in der Umlenkeinrichtung benötigt wird, wodurch sich die Herstellung der Umlenkeinrichtung vereinfacht. Der (einheitliche) Winkel, unter dem die Normalenrichtung zu einem jeweiligen Verbindungsabschnitt ausgerichtet ist, liegt in diesem Fall typischer Weise nahe bei 45°, da eine Umlenkung um exakt 45° typischerweise nur im Zentrum des Grundkörpers möglich ist, durch das die Mittelachse des Grundkörpers verläuft.

Bei einer weiteren Ausführungsform ist bei einem ersten Spiegelelement die Spiegelfläche unter einem ersten Winkel zu einer Mittelachse des Verbindungsabschnitts ausgerichtet, der rotationssymmetrisch zu der Mittelachse ausgebildet ist, und bei einem zweiten Spiegelelement ist die Spiegelfläche unter einem zweiten, vom ersten verschiedenen Winkel zur Mittelachse des Verbindungsabschnitts ausgerichtet. In diesem Fall werden zwei oder mehr, in der Regel eine Vielzahl, z.B. zehn oder mehr, unterschiedliche Winkel und somit zehn oder mehr unterschiedliche Typen von Spiegelelementen in der Umlenkeinrichtung verwendet, wobei die Abweichung zwischen der Ausrichtung der Spiegelflächen der unterschiedlichen Spiegelelemente typischer Weise vergleichsweise klein ist, so dass diese typischer Weise um weniger als 10°, bevorzugt um weniger als 5° von einem Winkel von 45° abweichen. Es versteht sich, dass zusätzlich zur Verwendung von unterschiedlichen Typen von Spiegelelementen auch die Ausrichtung der Mittelachsen der jeweiligen Verbindungsabschnitte in Bezug auf den Grundkörper variieren kann.

Bei einer Weiterbildung bilden die Ausnehmungen Durchbrüche in dem Grundkörper. Dies ist bei der Herstellung der Verbindung zwischen der Mantelfläche einer jeweiligen Ausnehmung und dem Verbindungsabschnitt während der Montage bzw. Justage eines jeweiligen Spiegelelements günstig. Beispielsweise kann bei einer stoffschlüssigen Verbindung das Fügemittel, z.B. ein Klebstoff, von der dem jeweiligen Verbindungsabschnitt abgewandten Unterseite des Grundkörpers zwischen die Mantelfläche und die Oberfläche des jeweiligen Verbindungsabschnitts eingebracht werden, die von der Unterseite des Grundkörpers leichter zugänglich ist als von der Oberseite.

Bei einer weiteren Ausführungsform sind die Mantelflächen der Ausnehmungen rotationssymmetrisch zu einer jeweiligen Mittelachse der Mantelflächen ausgebildet. In diesem Fall kann typischer Weise durch die Rotation eines jeweiligen Spiegelelements in der Ausnehmung die Ausrichtung des Spiegelelements relativ zum Grundkörper verändert werden, bevor dieses durch die stoffschlüssige oder direkte Verbindung in der Ausnehmung in seiner Lage fixiert wird.

Bei einer Weiterbildung bilden die Mantelflächen der Ausnehmungen eine Kugelfläche, eine konische Fläche oder eine Freiformfläche. Weist der Verbindungsabschnitt der Spiegelelemente eine radial geschliffene bzw. polierte Oberfläche auf, kann diese in Linien- bzw. in Kreiskontakt mit der Mantelfläche in Form der Kugelfläche, der konischen Fläche oder der Freiformfläche, z.B. in Form eines Axicons, gebracht werden. Durch Verschieben bzw. Drehen des Spiegelelements entlang der Mantelfläche kann das Spiegelelement in diesem Fall in drei Winkeln justiert werden, d.h. es können sowohl ein Drehwinkel des Spiegelelements bezüglich der Mittelachse der Mantelfläche der Ausnehmung als auch zwei Kippwinkel zwischen der Mittelachse des Verbindungsabschnitts und der Mittelachse des Spiegelelements eingestellt werden, bevor das Spiegelelement fest mit dem Grundkörper verbunden wird.

Bei einer Weiterbildung ist die Mittelachse des Verbindungsabschnitts mindestens eines Spiegelelements unter einem Kippwinkel zur Mittelachse der Mantelfläche ausgerichtet. Wie weiter oben beschrieben wurde, kann auf diese Weise die Ausrichtung der Spiegelfläche eines jeweiligen Spiegelelements relativ zum Grundkörper und somit auch relativ zum laseraktiven Medium verändert werden. Auf diese Weise kann typischer Weise die Anzahl an Spiegelelementen, die einen jeweils unterschiedlichen Winkel zwischen der Mittelachse des Verbindungsabschnitts und der Spiegelfläche aufweisen, reduziert werden. Der bzw. die Kippwinkel eines jeweiligen Spiegelelements hängt/hängen insbesondere vom radialen Abstand der jeweiligen Spiegelfläche von der Mittelachse des Grundkörpers ab, auf der auch das vom Grundkörper beabstandete scheibenförmige laseraktive Medium angeordnet ist. In der Regel ist die Mittelachse der Mantelfläche der Ausnehmung parallel oder im Wesentlichen parallel zur Mittelachse des in der Regel plattenförmigen Grundkörpers ausgerichtet. Gegebenenfalls kann Ausnehmung bzw. deren Mittelachse aber auch unter einem (ggf. erheblichen) Winkel gegenüber der Mittelachse des plattenförmigen Grundkörpers geneigt bzw. verkippt sein.

Bei einer weiteren Ausführungsform weist das Spiegelelement einen sich an das Kugelsegment anschließenden, bevorzugt zylindrischen Abschnitt auf, an dem die Spiegelfläche gebildet ist. Die (plane) Spiegelfläche an dem zylindrischen Abschnitt kann z.B. bei einem Endspiegel senkrecht zur Zylinderachse ausgerichtet sein und eine kreisförmige Geometrie aufweisen, in der Regel ist die Spiegelfläche aber unter einem Winkel in der Nähe von ca. 45° gegenüber der Zylinderachse ausgerichtet und weist daher eine ellipsenförmige Geometrie auf. Die Spiegelfläche bzw. der Rand der Spiegelfläche kann sich unmittelbar an den Verbindungsabschnitt anschließen, es ist aber auch möglich, dass zwischen dem Verbindungsabschnitt und der Spiegelfläche sich in Richtung der Mittelachse ein in der Regel zylindrischer Zwischenabschnitt erstreckt, an den sich ein prismatischer Zylinderabschnitt mit der Spiegelfläche anschließt. Für den Fall, dass die Spiegelelemente monolithisch gefügt sind, befinden sich die Fügestellen bzw. die Fügeflächen typischer Weise an den Übergängen zwischen den einzelnen Abschnitten, z.B. am Übergang zwischen dem (z.B. kugelförmigen) Verbindungsabschnitt und dem zylindrischen Abschnitt, an dem die Spiegelfläche gebildet ist.

Bei einer weiteren Ausführungsform weist das Kugelsegment des Verbindungsabschnitts einen Krümmungsradius auf, dessen Mittelpunkt auf der Spiegelfläche des Spiegelelements liegt, und zwar typischer Weise in der Mitte der Spiegelfläche, an welcher typischer Weise die Mittelachse des Verbindungsabschnitts durch die Spiegelfläche tritt. Ist dies der Fall, d.h. entspricht der Radius des Kugelsegments der Spiegelhöhe, ist eine Justage des Spiegelelements ohne Lateralversatz möglich, d.h. in diesem Fall erfolgt bei der Änderung des Kippwinkels zwischen der Mittelachse des Verbindungsabschnitts und der Mittelachse der Ausnehmung kein lateraler Versatz des Mittelpunkts der Spiegelfläche.

Bei einer nicht zur Erfindung gehörigen Ausführung ist der Verbindungsabschnitt der Spiegelelemente zylindrisch ausgebildet und weist bevorzugt eine plane Grundfläche auf. Der zylindrische Verbindungsabschnitt kann in diesem Fall beispielsweise in eine ebenfalls zylindrische Ausnehmung des Grundkörpers eingesetzt werden, die einen Absatz zur Auflage der planen Grundfläche aufweist. Auf diese Weise wird die Höhe bzw. der Abstand der Spiegelfläche zum Grundkörper festgelegt und auch der Kippwinkel kann bei der Justage in der Regel nicht verändert werden, da die Mittelachse des Verbindungsabschnitts typischer Weise parallel zur Mittelachse der zylindrischen Ausnehmung ausgerichtet ist. Lediglich die Ausrichtung der Spiegelfläche zur Mittelachse der Ausnehmung kann durch eine Drehung des Spiegelelements um dessen Mittelachse eingestellt werden.

Alternativ zur erfindungsgemäßen Verwendung von Ausnehmungen in dem Grundkörper kann die plane Grundfläche des Verbindungsabschnitts auf eine z.B. plane Oberfläche des Grundkörpers aufgelegt werden und z.B. mit Hilfe einer Schablone, welche kreisförmige Öffnungen aufweist, kann die Position des Spiegelelements an der Oberfläche des Grundkörpers fixiert werden, so dass das Spiegelelement nur noch um seine Mittelachse gedreht werden kann, um den Drehwinkel der Spiegelfläche zur Mittelachse festzulegen. In diesem Fall kann ein Fügemittel, z.B. ein Klebstoff, im Bereich der Öffnungen der Schablone auf die Oberfläche des Grundkörpers aufgebracht werden, bevor die Spiegelelemente mit der Oberfläche in Anlage gebracht werden und die Justage durch die Drehung um die Mittelachse kann vorgenommen werden, so lange das Fügemittel noch nicht ausgehärtet ist. Alternativ oder zusätzlich kann eine Fixierung der Spiegelelemente nach der Justage z.B. durch Löten oder durch (Glas-)Schweißen erfolgen. Wie weiter oben beschrieben wurde, ist bei der Verwendung von Spiegelelementen, die einen zylindrischen Verbindungsabschnitt aufweisen, eine Veränderung des Kippwinkels nicht möglich, so dass es in der Regel erforderlich ist, in der optischen Anordnung mehrere unterschiedliche Typen von Spiegelelementen zu verwenden, die unterschiedliche Winkel zwischen der Spiegelfläche und der Mittelachse des Verbindungsabschnitts aufweisen.

Bei einer weiteren Ausführungsform ist die Mehrzahl von Spiegelelementen auf dem Grundkörper in mehreren Kreisringen oder in mehreren regelmäßigen Mehrecken, z.B. in mehreren regelmäßigen Sechsecken, konzentrisch um eine Mittelachse des Grundkörpers angeordnet, auf der typischer Weise auch das Zentrum des scheibenförmigen laseraktiven Mediums liegt. Durch eine möglichst gleichmäßige bzw. regelmäßige Anordnung der Spiegelelemente wird es möglich, nur eine geringe Zahl von unterschiedlichen Typen von Spiegelelementen zu verwenden.

Typischer Weise erfolgt eine direkte Umlenkung zwischen den Spiegelflächen von jeweils zwei Spiegelelementen, d.h. es sind keine weiteren optischen Elemente im Strahlengang zwischen den Spiegelflächen der beiden Spiegelelemente angeordnet. Durch die direkte Umlenkung zwischen jeweils zwei insbesondere benachbarten Spiegelelementen (jeweils im Wesentlichen um ca. 2 x 90°) ist die Zahl der Spiegelelemente, die für die Umlenkung benötigt werden, gering und auch die Komplexität des Strahlengangs kann auf diese Weise reduziert werden. Die Spiegelelemente, zwischen denen eine direkte Umlenkung erfolgt, sind typischer Weise benachbart zueinander angeordnet und können sich in ein- und demselben Kreisring bzw. in ein- und demselben Mehreck oder in typischer Weise benachbarten Kreisringen bzw. Mehrecken befinden. Die direkte Umlenkung zwischen zwei jeweils benachbarten Spiegelelementen kann bei mehr als der Hälfe der Spiegelelemente jeweils im Wesentlichen in Umfangsrichtung erfolgen, d.h. in einem drehenden Muster. Eine Umlenkung in einem solchen drehenden Muster ist in der Regel günstig, um einen ggf. vorhandenen Astigmatismus zu korrigieren.

Bei einer weiteren Ausführungsform erfolgt bei mehr als der Hälfte der Spiegelelemente eine direkte Umlenkung zwischen den Spiegelflächen von jeweils zwei bevorzugt benachbarten Spiegelelementen entlang einer gemeinsamen (d.h. derselben) Umlenkrichtung. Eine solche Umlenkung, bei welcher der Laserstrahl bei mehr als der Hälfe der Gesamtzahl der Spiegelelemente jeweils parallel umgelenkt wird, wirkt sich vorteilhaft in Bezug auf eine thermisch bedingte Dejustage des Laserstrahls in einer Raumrichtung aus. Bei der hier beschriebenen Ausführungsform ist die Anordnung der Spiegelelemente in mehreren regelmäßigen Mehrecken, z.B. in mehreren regelmäßigen Sechsecken, in der Regel besonders vorteilhaft, da in diesem Fall mehrere Spiegelflächen entlang einer gemeinsamen Linie angeordnet sind, die einer Kante des Mehrecks entsprechen.

Bei der hier beschriebenen direkten 90°-Umlenkung an Spiegelflächen, die typischer Weise unter unterschiedlichen Einfallswinkeln getroffen werden, verändert sich in der Regel der Polarisationszustand des Laserstrahls aufgrund der einfallswinkelabhängigen Polarisationseigenschaften der reflektierenden Beschichtung. Eine Kompensation der Änderung des Polarisationszustands des Laserstrahls kann beispielsweise durch spezielle phasenkompensierende Spiegelflächen bzw. reflektierende Beschichtungen oder durch eine geeignete Kombination aus phasenschiebenden optischen Elementen, beispielsweise einer λ/4 und/oder einer λ/8-Platte, erfolgen, die im Strahlengang des Laserstrahls angeordnet sind und die einen Teil der optischen Anordnung bilden.

Bei einer weiteren Ausführungsform umfasst die optische Anordnung, in der Regel die Umlenkeinrichtung, einen Endspiegel, dessen Spiegelfläche senkrecht zu dem auf die Spiegelfläche des Endspiegels treffenden Laserstrahl ausgerichtet ist, so dass der Laserstrahl zu dem scheibenförmigen laseraktiven Medium zurück reflektiert wird. Durch die Verwendung des Endspiegels kann der Laserstrahl die Umlenkeinrichtung ein zweites Mal in umgekehrter Richtung durchlaufen, wodurch die Anzahl der Durchgänge durch das scheibenförmige laseraktive Medium verdoppelt wird. Die Spiegelfläche des Endspiegels ist zu diesem Zweck senkrecht zum auftreffenden (und reflektierten) Laserstrahl ausgerichtet.

Es versteht sich, dass die Umlenkeinrichtung bzw. die optische Anordnung nicht zwingend einen Endspiegel benötigt. Beispielsweise ist dies typischer Weise der Fall, wenn keine hohen Verstärkungsfaktoren benötigt werden, weil z.B. die Eingangsleistung des Seedlaserstrahls bereits vergleichsweise groß ist. In diesem Fall kann der Laserstrahl beispielsweise durch eine Durchgangsöffnung in dem Grundkörper oder auf andere Weise aus der optischen Anordnung ausgekoppelt werden und durchläuft die Umlenkeinrichtung kein zweites Mal. Auch die Einkopplung des Laserstrahls in die optische Anordnung kann durch eine Durchgangsöffnung in dem Grundkörper oder ggf. durch ein geeignetes Umlenkelement erfolgen.

Bevorzugt ist der Grundkörper der Umlenkeinrichtung aus einem Material gebildet, das zu mindestens 80 Gew.-% mit dem Material der Spiegelelemente übereinstimmt. In diesem Fall sind typischer Weise die thermischen Ausdehnungskoeffizienten der verwendeten Materialien ausreichend ähnlich. Bei den Materialien, deren chemische Zusammensetzung zu mindestens 80 Gew.-% übereinstimmt, kann es sich beispielsweise um (herkömmliches) Quarzglas und um dotiertes Quarzglas, beispielsweise um titandotiertes Quarzglas (ULE®) handeln, welches in der Regel einen TiO₂-Anteil von weniger als ca. 20 Gew.-% aufweist.

Bei einer weiteren Ausführungsform sind der Grundkörper und/oder die Spiegelelemente aus Glas, bevorzugt aus Quarzglas, aus einer Glaskeramik oder aus einem metallischen Material, bevorzugt einer Legierung, gebildet. Es hat sich als günstig erwiesen, wenn der Grundkörper und/oder die Spiegelelemente aus einem für die Laserstrahlung (im Wesentlichen) transparenten Material gebildet sind, da auf diese Weise etwaiges Lecklicht durch die Spiegelelemente, z.B. in Form von Streustrahlung, zu keiner Erwärmung an justagekritischen Bauteilen führt. Als Glas kann beispielsweise Borosilikat-Kronglas (BK7) oder Quarzglas verwendet werden, als Glaskeramik beispielsweise Zerodur®. Sowohl Zerodur® als auch ULE® weisen über einen vergleichsweise großen Temperaturbereich einen besonders niedrigen thermischen Ausdehnungskoeffizienten auf, was sich für die vorliegenden Anwendungen als vorteilhaft erwiesen hat. Auch metallische Materialien, insbesondere bestimmte Legierungen, bei denen der so genannte Invar-Effekt auftritt (Invar-Legierungen), weisen einen sehr geringen thermischen Ausdehnungskoeffizienten auf. Ein Beispiel für eine solche Invar-Legierung ist eine Eisen-Nickel-Legierung mit einem Anteil von ca. 36 % Nickel.

Bevorzugt sind der Grundkörper der Umlenkeinrichtung und die Spiegelelemente aus Materialien gebildet, deren thermische Ausdehnungskoeffizienten (Längenausdehnungskoeffizienten) im Wesentlichen gleich groß sind. Die thermischen Ausdehnungskoeffizienten können sich beispielsweise um weniger als 2 x 10⁻⁶ 1/K unterscheiden, und zwar über den gesamten hier relevanten Temperaturbereich zwischen ca. -30°C und ca. 200°C. Um zu vermeiden, dass es zwischen den Spiegelelementen und dem Grundkörper der Umlenkeinrichtung bei der Erwärmung durch die Laserstrahlung im Betrieb der optischen Anordnung zu Verspannungen kommt, sind alle tragenden Komponenten, d.h. typischer Weise der Grundkörper sowie in der Regel auch die Spiegelelemente, aus Materialien mit ausreichend ähnlichem, idealer Weise mit gleichem thermischen Ausdehnungskoeffizienten hergestellt.

Bei einer weiteren Ausführungsform ist die stoffschlüssige Verbindung durch eine Klebeverbindung und/oder eine Lötverbindung gebildet oder die direkte Verbindung ist durch eine Schweißverbindung und/oder durch eine Bonding-Verbindung gebildet. Für das monolithische Fügen der Spiegelelemente, genauer gesagt von deren Verbindungsabschnitten, mit dem Grundkörper, bestehen mehrere Möglichkeiten. Beispielsweise kann eine stoffschlüssige Verbindung unter Verwendung eines Fügemittels, beispielsweise unter Verwendung eines Klebstoffs, erfolgen. Alternativ oder zusätzlich kann eine Lötverbindung mit Hilfe eines Fügemittels in Form eines (Glas-)Lots vorgenommen werden. Alternativ kann eine direkte Verbindung zwischen einem jeweiligen Spiegelelement und dem Grundkörper erfolgen, beispielsweise durch einen Glas-Schweißprozess. Die direkte Verbindung kann auch durch ein so genanntes (direktes) Bonding-Verfahren erfolgen, bei dem die beiden zu verbindenden Materialien, die typischer Weise Silizium enthalten, an den jeweiligen zu verbindenden Oberflächen so stark erwärmt werden, dass sich zwischen diesen eine dauerhafte Verbindung ausbildet. Auch zwischen einem metallischen Material und einem Glas-Material kann eine dauerhafte, beispielsweise stoffschlüssige Verbindung hergestellt werden, aber auch eine direkte Verbindung ist möglich, beispielsweise eine Schweißverbindung.

Bei den hier beschriebenen direkten Verbindungstechniken ist es günstig, wenn diese eine hohe Oberflächenqualität aufweisen. Eine hohe Oberflächenqualität kann beispielsweise durch Schleifen oder Polieren des Materials der jeweiligen Bauelemente erreicht werden. Eine hohe Oberflächenqualität ist beispielsweise günstig, um zu erreichen, dass die jeweiligen Bauelemente mit der geforderten Präzision gegeneinander bewegt werden können. Allerdings kann es bei einer zu hohen Oberflächenqualität zu einem Ansprengen zwischen den Bauelementen kommen, welche die Bewegung der Bauelemente relativ zueinander erschwert. Daher ist es erforderlich, bei der Wahl der Oberflächenqualität einen Kompromiss einzugehen.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung eines Ausführungsbeispiels eines Scheibenlaserverstärkers mit einer Laserscheibe und mit einer Umlenkeinrichtung mit mehreren Spiegelelementen,
- Fig. 2a,b: schematische Darstellungen der Spiegelflächen der Spiegelelemente, die in drei Kreisringen bzw. in drei Secksecken angeordnet sind, jeweils in einer Draufsicht,
- Fig. 3a: eine schematische Darstellung eines Spiegelelements in Form eines Umlenkspiegels,
- Fig. 4a-c: schematische Darstellungen von Ausnehmungen in einem Grundkörper der Umlenkeinrichtung mit einer Mantelfläche in Form einer konischen Fläche, einer Kugelfläche sowie einer Freiformfläche,
- Fig. 5a,b: schematische Darstellungen der Justage bzw. der Fixierung eines Spiegelelements durch einen Ausnehmung, die einen Durchbruch in dem Grundkörper bildet, sowie
- Fig. 6a,b: schematische Darstellungen eines nicht zur Erfindung gehörigen Spiegelelements mit einem zylindrischen Verbindungsabschnitt, der auf einer planen Grundfläche des Grundkörpers befestigt ist bzw. der in einer zylindrischen Ausnehmung des Grundkörpers aufgenommen ist.

In der folgenden Beschreibung der Zeichnungen werden für gleiche bzw. funktionsgleiche Bauteile identische Bezugszeichen verwendet.

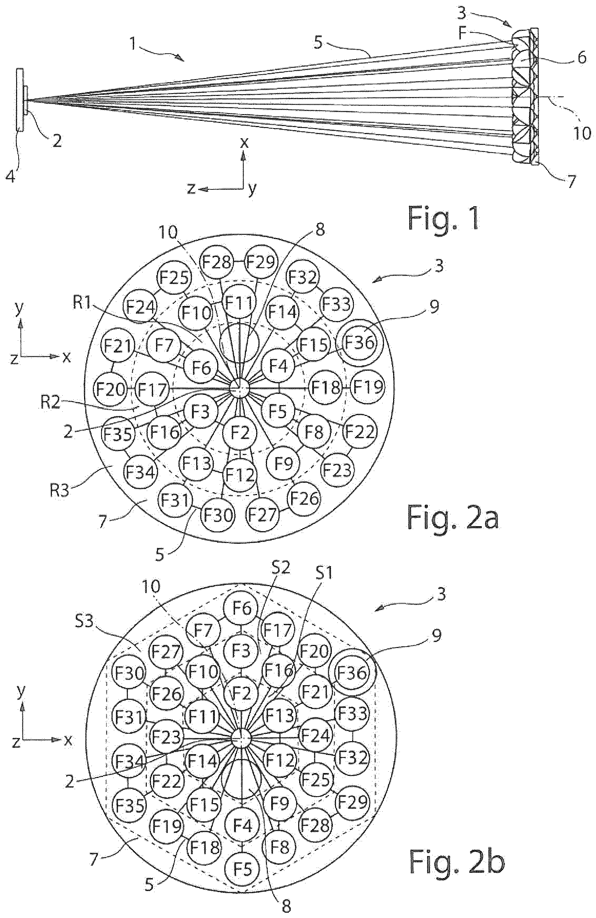

**Fig. 1** zeigt beispielhaft eine optische Anordnung, genauer gesagt eine optische Verstärkeranordnung, in Form eines (linearen) Scheibenlaserverstärkers 1, der ein scheibenförmiges laseraktives Medium, im Folgenden als Laserscheibe 2 bezeichnet, sowie eine Umlenkeinrichtung 3 aufweist. Die Laserscheibe 2 ist auf einer Wärmesenke 4 befestigt und ist an ihrer der Wärmesenke 4 zugewandten Seite verspiegelt, um einen zu verstärkenden Laserstrahl 5, der von der Umlenkeinrichtung 3 ausgehend auf die Laserscheibe 2 trifft, zur Umlenkeinrichtung 3 zurück zu reflektieren, so dass die Laserscheibe 2 mehrmals von dem Laserstrahl 5 durchlaufen und hierbei verstärkt wird.

Um einen solchen Mehrfachdurchgang durch die Laserscheibe 2 zu ermöglichen, wird der Laserstrahl 5 von an der Umlenkeinrichtung 3 gebildeten Spiegelelementen 6 in Form von Umlenkspiegeln, genauer gesagt an deren Spiegelflächen F2 bis F35 (vgl. **Fig. 2a****,b**) umgelenkt. Die Spiegelelemente 6 sind an einem plattenförmigen Grundkörper 7 der Umlenkeinrichtung 3 mit Hilfe einer monolithischen Aufbautechnik befestigt, die weiter unten näher beschrieben wird. Es versteht sich, dass die Umlenkeinrichtung 3 auch eine größere Anzahl oder eine kleinere Anzahl von Spiegelelementen 6 aufweisen kann. Der plattenförmige Grundkörper 7 ist im gezeigten Beispiel parallel zur XY-Ebene eines XYZ-Koordinatensystems und parallel zur Laserscheibe 2 ausgerichtet. Es versteht sich aber, dass der plattenförmige Grundkörper 7 bei geeigneter Ausrichtung der Spiegelelemente 6 ggf. unter einem (kleinen) Winkel zur XY-Ebene ausgerichtet sein kann.

Wie in Fig. 2a,b zu erkennen ist, tritt der Laserstrahl 5, der von einer nicht gezeigten Laserquelle erzeugt wird, z.B. über eine Durchgangsöffnung 8 durch den plattenförmigen Grundkörper 7 hindurch und ist hierbei derart ausgerichtet, dass er die Laserscheibe 2 mittig trifft und an dieser, genauer gesagt an deren verspiegelter Rückseite, zu einer zweiten Spiegelfläche F2 reflektiert wird. Der von der Laserscheibe 2 ausgehende Laserstrahl 5 wird an der zweiten Spiegelfläche F2 direkt zu einer dritten, benachbarten Spiegelfläche F3 umgelenkt bzw. reflektiert. Die dritte Spiegelfläche F3 ist bezüglich der Laserscheibe 2 derart ausgerichtet, dass der Laserstrahl 5 von der dritten Spiegelfläche F3 erneut zur Laserscheibe 2 umgelenkt bzw. reflektiert wird. An der Laserscheibe 2 wird der Laserstrahl 5 zu einer vierten Spiegelfläche F4 umgelenkt, von dieser direkt zu einer fünften Spiegelfläche F5 reflektiert, usw.

Bei den in Fig. 2a,b gezeigten Umlenkeinrichtungen 3 erfolgt die Umlenkung des Laserstrahls 5 somit abwechselnd zwischen der Laserscheibe 2 und einem jeweiligen Paar von im gezeigten Beispiel benachbart angeordneten Spiegelflächen F2, F3; F4, F5; F5, F6; ..., F34, F35. Der Strahlweg des Laserstrahls 5 zwischen der Laserscheibe 2 und den Spiegelflächen F2, F3; F4, F5; F5, F6; ..., F34, F35, genauer gesagt dessen Projektion in die XY-Ebene, ist in Fig. 2a,b ebenfalls dargestellt. Bei den in Fig. 2a,b gezeigten Beispielen weisen die Umlenkeinrichtungen 3 jeweils einen Endspiegel 9 auf, dessen Spiegelfläche F36 senkrecht zu dem auf die Spiegelfläche F36 des Endspiegels 9 treffenden Laserstrahl 5 ausgerichtet ist, so dass der Laserstrahl 5 zu dem scheibenförmigen laseraktiven Medium 2 (d.h. in sich) zurück reflektiert wird und den Strahlweg durch die Umlenkeinrichtung 3 ein zweites Mal mit umgekehrter Propagationsrichtung durchläuft. Es versteht sich, dass an Stelle des Endspiegels 9 eine weitere Durchgangsöffnung in der Umlenkeinrichtung 3 vorgesehen sein kann, um den Laserstrahl 5 aus dem Scheibenlaserverstärker 1 auszukoppeln, ohne dass dieser die Umlenkeinrichtung 3 erneut durchläuft, oder ein Umlenkspiegel vorgesehen sein kann, der den Laserstrahl aus dem Scheibenlaserverstärker 1 auskoppelt.

Die in Fig. 2a,b gezeigten Umlenkeinrichtungen 3 unterscheiden sich im Wesentlichen dadurch, dass bei der in Fig. 2a gezeigten Umlenkeinrichtung 3 die Spiegelelemente 6 in einem kreisförmigen Muster, genauer gesagt in drei Kreisringen R1, R2, R3 konzentrisch um eine sich in Z-Richtung erstreckende Mittelachse 10 des plattenförmigen Grundkörpers 7 angeordnet sind, während bei der in Fig. 2b gezeigten Umlenkeinrichtung 3 die Spiegelelemente 6 in drei regelmäßigen, konzentrisch angeordneten Sechsecken S1, S2, S3 um die Mittelachse 10 des plattenförmigen Grundkörpers 7 angeordnet sind. Die in Fig. 2b gezeigte Anordnung der Spiegelelemente 6 in einem sechseckigen Muster ist besonders kompakt.

Bei dem in Fig. 2a gezeigten Beispiel erfolgt die direkte Umlenkung zwischen den Spiegelflächen F2, F3; F4, F5; F6, F7; ... benachbarter Spiegelelemente 6 drehend, d.h. im Wesentlichen in azimutaler Richtung bzw. in Umfangsrichtung. Nur zum Wechsel zwischen den Ringbereichen R1, R2, R3 erfolgt eine Umlenkung in radialer Richtung. Im Gegensatz hierzu erfolgt bei der in Fig. 2b gezeigten Umlenkeinrichtung 3 die Umlenkung zwischen den Spiegelflächen F2, F3; F4, F5; F6, F7; ... von jeweils zwei benachbarten Spiegelelementen 6 bei mehr als der Hälfte der Spiegelelemente 6 in derselben Richtung, im gezeigten Beispiel in Y-Richtung, und zwar bei genau achtundzwanzig der insgesamt vierunddreißig Spiegelelemente 6.

Es versteht sich, dass die in Zusammenhang mit Fig. 2a gezeigte drehende Umlenkung und die in Fig. 2b gezeigte Umlenkung in einer gemeinsamen Richtung Y auch in ein- und derselben Umlenkeinrichtung 3 kombiniert werden können, beispielsweise um die Korrektur von Abbildungsfehlern zu optimieren. Auch kann bei der in Fig. 2b gezeigten Anordnung der Spiegelelemente 6 in mehreren Sechsecken S1, S2, S3 eine im Wesentlichen drehende Umlenkung erfolgen und bei der in Fig. 2a gezeigten Anordnung der Spiegelelemente 6 in mehreren Kreisringen R1, R2, R3 kann eine Umlenkung stattfinden, die im Wesentlichen entlang einer gemeinsamen Richtung erfolgt.

Um eine möglichst große Stabilität des Scheibenlaserverstärkers 1 sicherzustellen, wird die Zahl der Bewegungs-Freiheitsgrade der Spiegelelemente 6 bzw. der Spiegelflächen F2, F3, ... bei der Herstellung der Umlenkeinrichtung 3 durch eine monolithische Aufbautechik bei deren Verbindung mit dem plattenförmigen Grundkörper 7 minimiert, wie nachfolgend näher beschrieben wird.

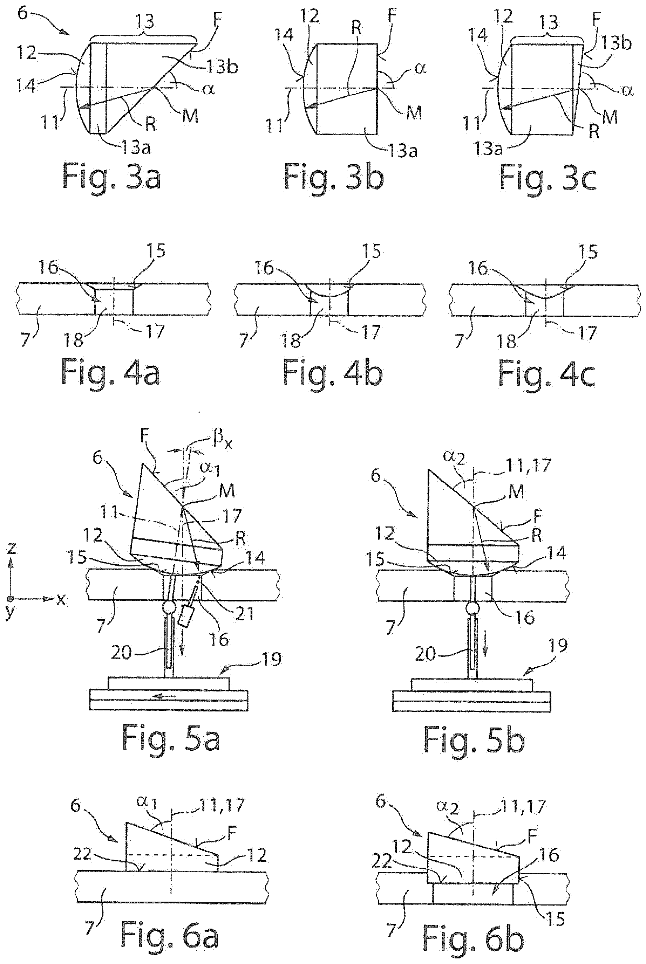

**Fig. 3a** zeigt beispielhaft eines der Spiegelelemente 6, welches einen rotationssymmetrisch zu einer Mittelachse 11 ausgebildeten Verbindungsabschnitt 12 in Form eines Kugelsegments aufweist. An den Verbindungsabschnitt 12 schließt sich entlang der Mittelachse 11 ein zylindrischer Abschnitt 13 an, der in einen ersten, vollzylindrischen Abschnitt 13a sowie in einen zweiten, prismatischen Abschnitt 13b unterteilt ist. Der prismatische Abschnitt 13b ist ebenfalls entlang seines Umfangs zylindrisch, wobei die plane Spiegelfläche F einen Schnitt durch den zylindrischen Abschnitt 13 in Form einer elliptischen Fläche bildet. An Stelle einer planen Spiegelfläche F kann ggf. auch eine gekrümmte Spiegelfläche F verwendet werden, beispielsweise eine parabolisch gekrümmte Spiegefläche F, um eine fokussierende oder eine defokussierende Wirkung zu erreichen.

Die Mittelachse 11 des Spiegelelements 6 verläuft durch den Mittelpunkt M der Spiegelfläche F. Der Laserstrahl 5 trifft die Spiegelfläche F typischer Weise zentriert, d.h. das Zentrum des Strahlquerschnitts des Laserstrahls 5 stimmt idealer Weise mit dem Mittelpunkt M der Spiegelfläche F überein. Im gezeigten Beispiel bildet der Mittelpunkt M der Spiegelfläche F gleichzeitig den Mittelpunkt M des Krümmungsradius R (z.B. von ca. 15 mm) der Kugelkalotte 14, d.h. der sphärischen Oberfläche des Verbindungsabschnitts 12 des Spiegelelements 6, was für die Justage günstig ist (s.u.).

Die Spiegelfläche F ist im gezeigten Beispiel unter einem Winkel α von 45° zur Mittelachse 11 des Verbindungsabschnitts 12 ausgerichtet. Wie in Fig. 1 zu erkennen ist, hängt der Einfallswinkel bzw. der Ausfallswinkel des Laserstrahls 5 auf eine jeweilige Spiegelfläche F2, F3, ... von der Position des jeweiligen Spiegelelements 6 in Bezug auf die Laserscheibe 2, insbesondere vom radialen Abstand von der Mittelachse 11 des Grundkörpers 7 der Umlenkeinrichtung 3 ab. Um sicherzustellen, dass der Laserstrahl 5 bei der Reflexion an der jeweiligen Spiegelfläche F2, F3, ... von bzw. zur Laserscheibe 2 umgelenkt wird, ist es günstig, den Winkel α der Spiegelfläche F2, F3, ... zur Mittelachse 11 des Verbindungsabschnitts 12 zu variieren, d.h. mehrere Typen von Spiegelelementen 6 zu verwenden, die sich nur durch den Winkel α der Spiegelfläche F2, F3, ... zur Mittelachse 11 des Verbindungsabschnitts 12 voneinander unterscheiden.

Aufgrund der Tatsache, dass der Laserstrahl 5 direkt zu einem in der Regel benachbarten Spiegelelement 6 reflektiert wird, sollte die Abweichung des Winkels α von 45° nicht zu groß gewählt werden. Typischer Weise liegt der Winkel α zwischen ca. 30° und ca. 60°, bevorzugt zwischen 35° und 55°, insbesondere zwischen 40° und 50°. Die Zahl der unterschiedlichen Winkel α und damit der unterschiedlichen Typen von Spiegelelementen 6 hängt von der Anordnung der Spiegelelemente 6 auf dem Grundkörper 7 sowie von der Richtung der Umlenkung zwischen den Spiegelelementen 6 in Bezug auf die XY-Ebene ab. Die Wahl des Winkels α hängt auch davon ab, ob die Mittelachse 11 eines jeweiligen Verbindungsabschnitts 12 senkrecht zur XY-Ebene ausgerichtet oder ggf. gegenüber dieser unter einem Kippwinkel ausgerichtet ist, wie weiter unten näher beschrieben wird.

**Fig. 3b,c** zeigen zwei Beispiele für die Ausgestaltung des Endspiegels 9 von Fig. 2a,b mit einer Spiegelfläche F, die bei dem in Fig. 3b gezeigten Beispiel senkrecht zur Mittelachse 11 des Kugelsegments 12 ausgerichtet ist, d.h. unter einem Winkel α von 90°, während die Spiegelfläche F bei dem in Fig. 3c gezeigten Beispiel unter einem Winkel α von ca. 83° zur Mittelachse 11 des Verbindungsabschnitts 12 ausgerichtet ist. Sowohl in Fig. 3b als auch in Fig. 3c ist der Krümmungsradius R des Kugelsegments 12 so gewählt, dass der Mittelpunkt M der Spiegelfläche F mit dem Mittelpunkt M des Krümmungsradius R übereinstimmt. Dies ist für die Justage des Endspiegels 9 günstig (s.u.), aber nicht zwingend erforderlich.

Die Spiegelfläche F ist bei allen in Fig. 3a-c gezeigten Beispielen jeweils poliert und weist eine hochreflektierende Beschichtung auf, die für den Laserstrahl 5 eine Reflektivität von idealerweise mehr als ca. 99,98 % aufweist. Im gezeigten Beispiel weist der Laserstrahl 5 eine Wellenlänge von 1030 nm auf, es versteht sich aber, dass die reflektierende Beschichtung auch für Laserstrahlen 5 bei einer anderen Wellenlänge ausgelegt bzw. optimiert sein kann. Die reflektierende Beschichtung kann insbesondere auch ausgebildet sein, eine Veränderung des Polarisationszustands des Laserstrahls 5 zu kompensieren, die durch das Auftreffen des Laserstrahls 5 unter unterschiedlichen, von 45° abweichenden Einfallswinkeln erzeugt wird. Alternativ kann eine solche Veränderung durch eine Phasenverschiebung kompensiert werden, die durch im Strahlengang des Laserstrahls 5 angeordnete phasenschiebene Elemente, beispielsweise durch eine λ/4-Platte und/oder eine λ/8-Platte, erzeugt werden.

Die Kugelkalotte 14 bzw. die sphärische Oberfläche des Kugelsegments 12 weist eine definierte, typischer Weise geringe Rauheit auf, um die Anlage an einer Mantelfläche 15 einer Ausnehmung 16 in dem plattenförmigen Grundkörper 7 zu verbessern, wie sie beispielhaft in **Fig. 4a****-c** dargestellt ist. Die Mantelfläche 15 ist in den drei gezeigten Beispielen radialsymmetrisch zu einer Mittelachse 17 der Mantelfläche 15 ausgebildet, die mit der Mittelachse 17 der ebenfalls rotationssymmetrischen Ausnehmung 16 zusammenfällt. Die in Fig. 4a-c gezeigten drei Beispiele unterscheiden sich durch die Art der Krümmung der Mantelfläche 15, bei der es sich bei dem in Fig. 4a gezeigten Beispiel um eine konische Fläche, bei dem in Fig. 4b gezeigten Beispiel um eine sphärische Fläche und bei dem in Fig. 4c gezeigten Beispiel um eine Freiformfläche in der Art eines Axicons handelt. Die unterschiedliche Ausgestaltung der Mantelflächen 15 ermöglicht es, einen gewünschten linienförmigen bzw. kreisförmigen Kontakt zu der Kugelkalotte 14 herzustellen. Beispielsweise kann durch die Wahl des Öffnungswinkels der in Fig. 4a gezeigten konischen Mantelfläche 15, des Radius der in Fig. 4b gezeigten sphärischen Mantelfläche 15 bzw. der Geometrie der in Fig. 4c gezeigten Freiformfläche beeinflusst werden, auf welcher Höhe in Z-Richtung der Kontakt zwischen der Mantelfläche 15 und der Kugelkalotte 14 erfolgt. Wie in Fig. 4a-c zu erkennen ist, weisen die Ausnehmungen 16 jeweils einen sich an die Mantelfläche 15 anschließenden zylindrischen Abschnitt 18 auf, der sich bis zur der Mantelfläche 15 des plattenförmigen Grundkörpers 7 abgewandten Unterseite des Grundkörpers 7 erstreckt, d.h. die Ausnehmungen 16 bilden Durchbrüche in dem Grundkörper 7. Da die Justage auch von der Oberseite des Grundkörpers 7 durchgeführt werden kann, müssen die Ausnehmungen 16 nicht zwingend Durchbrüche aufweisen.

Mit Hilfe der als Durchbrüche ausgebildeten Ausnehmungen 16 kann eine Ausrichtung bzw. Justage von in den Ausnehmungen 16 aufgenommenen Spiegelelementen 6 von der Unterseite des plattenförmigen Grundkörpers 7 erfolgen. **Fig. 5a,b** zeigen beispielhaft eine Justageeinrichtung 19 mit einem Saugarm 20, der einen über ein Gelenk verschwenkbaren Abschnitt aufweist, um eine gewünschte Ausrichtung des Spiegelelements 6, genauer gesagt des Verbindungsabschnitts 12 in Form des Kugelsegments, bezüglich der Mantelfläche 15 der Ausnehmung 16 einzustellen. Der Saugarm 20 übt zu diesem Zweck eine Saugkraft auf das Spiegelelement 6 aus, wie dies in Fig. 5b durch einen Kraftpfeil angedeutet ist.

Wie in Fig. 5a zu erkennen ist, kann bei der Justage des Spiegelelements 6 ein Kippwinkel β_{X} zwischen der Mittelachse 11 des Verbindungsabschnitts 12 und der Mittelachse 17 der Mantelfläche 15 bzw. der Ausnehmung 16 in der XZ-Ebene eingestellt werden, der im gezeigten Beispiel bei nicht mehr als ca. 10° liegt, aber ggf. auch größer ausfallen kann. Der Kippwinkel βₓ kann selbstverständlich auch bei 0° liegen, wie dies in Fig. 5b dargestellt ist. Bei der Veränderung des Kippwinkels βₓ bei der Justage wirkt sich günstig aus, dass der Mittelpunkt M der Spiegelfläche F mit dem Mittelpunkt M des Krümmungsradius R der Kugelkalotte 14 des Kugelsegments 12 übereinstimmt, so dass dieser bei der Justage auf der Drehachse liegt und es daher nicht zu einem lateralen Versatz des Mittelpunkts M kommt. Für die Justage kann neben dem Kippwinkel β_{X} in der XZ-Ebene auch ein (nicht dargesteller) Kippwinkel β_{Y} in der YZ-Ebene sowie ein (nicht dargestellter) Drehwinkel um die Mittelachse 11 des Verbindungsabschnitts 12 eingestellt werden. Um die Spiegelelemente 6 bei der Justage geeignet auszurichten, kann der Laserstrahl 5 von der Strahlquelle ausgehend über zwei der Spiegelflächen F2, F3 zur Laserscheibe 2 zurück reflektiert werden, wobei die Spiegelelemente 6 bei der Justage so verkippt bzw. gedreht werden, dass der Laserstrahl 5 mittig auf die Laserscheibe 2 trifft. Entsprechend kann die Justage auch für die weiteren Spiegelelemente 6 erfolgen.

Sobald das Spiegelelement 6 z.B. mit Hilfe des Saugarms 20 in der gewünschten Ausrichtung bzw. Lage relativ zum plattenförmigen Grundkörper 7 angeordnet ist, kann dieses dauerhaft mit dem Grundkörper 7 verbunden werden. Zu diesem Zweck wird im gezeigten Beispiel ein Klebstoff 21 als Fügemittel in den Zwischenraum zwischen der Mantelfläche 15 und dem Spiegelelement 6 eingebracht, wie dies in Fig. 5a dargestellt ist.

Sowohl bei dem Material des Grundkörpers 7 als auch bei dem Material der Spiegelelemente 6 kann es sich beispielsweise um Glas oder eine Glaskeramik handeln, die idealer Weise für die Wellenlänge des Laserstrahls 5 transparent bzw. im Wesentlichen transparent sind. Das Material des Grundkörpers 7 und das Material der Spiegelelemente 6 sollten einen möglichst ähnlichen thermischen Ausdehnungskoeffizienten aufweisen: Beispielsweise können sich die thermischen Ausdehnungskoeffizienten (bei einer Längenänderung) der beiden Materialien um weniger als 2 x 10⁻⁶ 1/K unterscheiden. Es ist daher günstig, wenn beide Materialien zu mindestens 80 Gew.-% aus demselben Material, insbesondere aus identischem Material, gebildet sind. Dies ist beispielsweise der Fall, wenn der Grundkörper 7 aus titandotiertem Quarzglas (ULE®) und die Spiegelelemente 6 aus herkömmlichem Quarzglas gebildet sind. Alternativ kann der Grundkörper 7 aus einer Glaskeramik, z.B. aus Zerodur®, und die Spiegelelemente 6 können aus Quarzglas gebildet sein, oder umgekehrt. Alternativ kann es sich bei dem Material des Grundkörpers 7, ggf. auch bei dem Material der Spiegelelemente 6, um ein metallisches Material handeln, beispielsweise um eine Invar-Legierung. Ein Grundkörper 7 aus einer Invar-Legierung kann mit Spiegelelementen 6 aus Glas oder einer Glaskeramik verschweißt werden, es ist aber auch eine stoffschlüssige Verbindung möglich, z.B. durch Löten oder Verkleben.

Insbesondere bei der Verwendung von Glas enthaltenden bzw. aus Glas bestehenden Materialien kann eine stoffschlüssige Verbindung zwischen dem Spiegelelement 6, genauer gesagt der Kugelkalotte 14 des Kugelsegments 12, und der Mantelfläche 15 auch mit Hilfe eines anderen Fügemittels, beispielsweise mit Hilfe eines (Glas-)Lots, erfolgen.

Alternativ zu einer stoffschlüssigen Verbindung kann das Spiegelelement 6 auch durch eine direkte Verbindung mit dem Grundkörper 7 verbunden werden, beispielsweise durch (Glas-)Schweißen oder durch Bonden, d.h. typischer Weise durch (ggf. lokales) Erhitzen des Grundkörpers 7 und des Spiegelelements 6, bis sich zwischen der Mantelfläche 15 der Ausnehmung 16 und der Kugelkalotte 14 eine feste, dauerhafte Verbindung bildet.

Wie in Fig. 5a,b ebenfalls zu erkennen ist, ist bei dem in Fig. 5a gezeigten Spiegelelement 6 die Spiegelfläche F unter einem ersten Winkel α₁ zur Mittelachse 11 des Verbindungsabschnitts 12 ausgerichtet, der kleiner ist als 45°, und bei dem in Fig. 5b gezeigten Spiegelelement 6 ist die Spiegelfläche F unter einem zweiten Winkel α₂ zur Mittelachse 11 des Verbindungsabschnitts 12 ausgerichtet, der größer ist als 45°. Auf diese Weise kann die Ausrichtung der Spiegelfläche F relativ zur XY-Ebene bzw. relativ zur Laserscheibe 2 zusätzlich zur Wahl des Kippwinkels βₓ, β_{y} eingestellt werden. Dies ist insbesondere bei Spiegelelementen 6 günstig, die vergleichsweise weit von der Mittelachse 11 des Grundkörpers 7 entfernt angeordnet sind und bei denen Einfalls- und Ausfallswinkel des Laserstrahls 5 in der Regel am stärksten von 45° abweichen. Durch die Einstellung des Kippwinkels βₓ, β_{y} kann eine Feinjustage bei der Ausrichtung der Spiegelelemente 6 erfolgen.

Typischerweise ist bei dem in Fig. 5b gezeigten Beispiel, bei dem die Mittelachse des Verbindungsabschnitts 12 parallel zur z-Richtung ausgerichtet ist, der zweite Winkel α₂ zur Mittelachse 11 des Verbindungsabschnitts 12 von 45° verschieden. In diesem Fall ist typischerweise bei allen Spiegelelementen 6, die denselben (von Null verschiedenen) radialen Abstand zur Mittelachse 11 aufweisen, weil sie in demselben Ringbereich R1, R2, R3 angeordnet sind, der zweite Winkel α₂ entweder größer als 45° oder kleiner als 45°. Lediglich bei einer Umlenkung zwischen den Ringbereichen R1, R2, R3, beispielsweise vom ersten Ringbereich R1 in den zweiten Ringbereich R2, tritt typischerweise eine Abweichung in die andere Richtung (kleiner oder größer als 45°) auf.

**Fig. 6a,b** zeigen Beispiele für die Befestigung von Spiegelelementen 6 an dem Grundkörper 7, die jeweils einen zylindrischen Verbindungsabschnitt 12 mit einer planen Grundfläche 22 aufweisen. Bei dem in Fig. 6a gezeigten Beispiel ist das Spiegelelement 6 mit der planen Grundfläche 22 an der der Laserscheibe 2 zugewandten Seite des Grundkörpers 7 befestigt und direkt durch eine Schweißverbindung mit dieser verbunden, während der zylindrische Verbindungsabschnitt 12 bei dem in Fig. 6b gezeigten Beispiel in eine Ausnehmung 16 des Grundkörpers 7 eingesetzt ist, die einen zylindrische Mantelfläche 15 mit einem Absatz aufweist, auf welcher die plane Grundfläche 22 des Verbindungsabschnitts 12 am äußeren Rand aufliegt. Bei den in Fig. 6a,b gezeigten Beispielen ist die Mittelachse 11 des zylindrischen Verbindungsabschnitts 12 stets senkrecht zum plattenförmigen Grundkörper 7 ausgerichtet und stimmt bei dem in Fig. 6b gezeigten Beispiel mit der Mittelachse 17 der Ausnehmung 16 überein. Bei den in Fig. 6a,b gezeigten Beispielen kann somit keine Einstellung des Kippwinkels β erfolgen, sondern lediglich eine Einstellung des Drehwinkels um die Mittelachse 11 des zylindrischen Verbindungsabschnitts 12, bevor das jeweilige Spiegelelement 6 dauerhaft mit dem Grundkörper 7 verbunden wird. In diesem Fall wird ein geeigneter Winkel α₁, α₂ zwischen der Spiegelfläche F und der Mittelachse 11 des Verbindungsabschnitts 12 bereits bei der Fertigung des Spiegelelements 6 festgelegt.

Bei dem in Fig. 6b gezeigten Beispiel kann der Drehwinkel um die Mittelachse 11 eingestellt werden, indem das Spiegelelement 6 in der Ausnehmung 16 gedreht wird. Bei dem in Fig. 6a gezeigten Beispiel kann zu diesem Zweck eine (nicht dargestellte) Schablone auf die Oberseite des Grundkörpers 7 aufgelegt werden, die kreisrunde durchgehende Öffnungen für die jeweiligen Spiegelelemente 6 aufweist. Die Spiegelelemente 6 können in diesem Fall in den Öffnungen um die jeweilige Mittelachse 11 gedreht werden, bis der gewünschte Drehwinkel erreicht ist. Auch ein automatisiertes, maschinelles Anbringen der Spiegelelemente 6 an der Oberseite des Grundkörpers 7 unter einem gewünschten Drehwinkel ist möglich. Die Spiegelelemente 6 können nach der Einstellung des Drehwinkels stoffschlüssig oder direkt mit dem plattenförmigen Grundkörper 7 verbunden werden. Gegebenenfalls kann ein Fügemittel, beispielsweise ein Klebstoff, bereits vor der Einstellung des Drehwinkels zwischen die plane Grundfläche 22 und die Oberseite des plattenförmigen Grundkörpers 7 eingebracht werden. In diesem Fall muss die Einstellung des Drehwinkels der jeweiligen Spiegelelemente 6 abgeschlossen sein, bis der Klebstoff aushärtet. Es versteht sich, dass bei dem in Fig. 6b gezeigten Beispiel der zylindrische Verbindungsabschnitt 12 nicht zwingend eine plane Grundfläche 22 aufweisen muss, da es lediglich auf die Geometrie am äußeren Rand des Verbindungsabschnitts 12 ankommt. Es versteht sich auch, dass an Stelle eines gestuften Absatzes ggf. auch ein konischer Absatz an der Ausnehmung 16 gebildet sein kann, der als Auflage für das an seiner Unterseite bzw. an seinem Rand entsprechend geformte Spiegelelement 6 dient.

Bei den weiter oben beschriebenen Beispielen sind die Spiegelelemente 6 einteilig ausgebildet. Es versteht sich aber, dass die Spiegelelemente 6 auch mehrteilig ausgebildet sein können, wobei die Teile der Spiegelelemente 6 in diesem Fall monolithisch gefügt sind, d.h. ebenfalls durch eine stoffschlüssige oder eine direkte Verbindung miteinander verbunden sind. Beispielsweise können in diesem Fall der Verbindungsabschnitt 12 und der zylindrische Abschnitt 13 der Spiegelelemente 6 zwei Bauteile bilden, die stoffschlüssig oder direkt miteinander verbunden sind.

Mit Hilfe der weiter oben beschriebenen Montage- bzw. Befestigungstechniken lassen sich unter Verwendung eines geeigneten Grundkörpers 7 quasimonolithische Spiegelarrays herstellen, die sich mit wenigen Freiheitsgraden zur Laserscheibe 2 ausrichten lassen, wodurch sich die Gesamtstabilität des Scheibenlaserverstärkers 1 erhöht. Insbesondere kann hierbei eine präzise Ausrichtung der Spiegelelemente 6 mit einer Genauigkeit in der Größenordnung von ca. 10 µrad erreicht werden. Durch die weiter oben beschriebene Umlenktechnik kann gleichzeitig die Anzahl der benötigten optischen Komponenten sowie die Komplexität des Strahlengangs des Laserstrahls 5 auf ein Minimum reduziert werden. Die Verwendung möglichst weniger optischer und mechanischer Bauteile ermöglicht eine kostengünstige und insbesondere robuste Realisierung des Scheibenlaserverstärkers 1.

## Patentansprüche

1. Optische Anordnung (1), umfassend:
ein scheibenförmiges laseraktives Medium (2),
eine Umlenkeinrichtung (3) mit mehreren Spiegelelementen (6), an denen Spiegelflächen (F; F2, F3, F4, F5, ...) zur Umlenkung eines zu verstärkenden Laserstrahls (5) gebildet sind, sowie mit einem Grundkörper (7), an dem die Spiegelelemente (6) befestigt sind, wobei die Spiegelelemente (6) in Paaren angeordnet sind, deren Spiegelflächen (F3, F4; F5, F6; ...) derart ausgerichtet sind, dass der zu verstärkende Laserstrahl (5) von einer jeweiligen Spiegelfläche (F3; F5, ...) über das scheibenförmige laseraktive Medium (2) zu einer anderen Spiegelfläche (F4; F6, ...) umgelenkt wird,
wobei die Spiegelelemente (6) einteilig ausgebildet oder monolithisch gefügt sind und einen bevorzugt rotationssymmetrisch zur einer Mittelachse (11) ausgebildeten Verbindungsabschnitt (12) aufweisen, der entweder über eine stoffschlüssige Verbindung oder eine direkte Verbindung fest, das heisst dauerhaft, mit dem Grundkörper (7) verbunden ist,
**dadurch gekennzeichnet,**
**dass** in dem Grundkörper (7) Ausnehmungen (16) gebildet sind, die jeweils eine Mantelfläche (15) zur stoffschlüssigen oder zur direkten Verbindung mit dem Verbindungsabschnitt (12) eines jeweiligen Spiegelelements (6) aufweisen, und dass der Verbindungsabschnitt durch ein Kugelsegment (12) gebildet ist und dass das Kugelsegment (12) an einer Kugelkalotte (14) des Kugelsegments (12) stoffschlüssig oder direkt mit der Mantelfläche (15) der Ausnehmung (16) des Grundkörpers (7) verbunden ist.

2. Optische Anordnung nach Anspruch 1, bei der die Spiegelflächen (F; F2, F3, ...) der Spiegelelemente (6) plan sind und unter einem Winkel (α) zwischen 30° und 60° zu einer Mittelachse (11) des Verbindungsabschnitts (12) ausgerichtet sind, der rotationssymmetrisch zu der Mittelachse (11) ausgebildet ist.

3. Optische Anordnung nach Anspruch 1 oder 2, bei der bei einem ersten Spiegelelement (6) die Spiegelfläche (F) unter einem ersten Winkel (α₁) zu einer Mittelachse (11) des Verbindungsabschnitts (12) ausgerichtet ist, der rotationssymmetrisch zu der Mittelachse (11) ausgebildet ist, und bei der bei einem zweiten Spiegelelement (6) die Spiegelfläche (F) unter einem zweiten, vom ersten verschiedenen Winkel (α₂) zu der Mittelachse (11) des Verbindungsabschnitts (12) ausgerichtet ist.

4. Optische Anordnung nach einem der vorhergehenden Ansprüche, bei der die Ausnehmungen (16) Durchbrüche in dem Grundkörper (7) bilden.

5. Optische Anordnung nach einem der vorhergehenden Ansprüche, bei der die Mantelflächen (15) der Ausnehmungen (16) rotationssymmetrisch zu einer jeweiligen Mittelachse (17) der Mantelflächen (15) ausgebildet sind.

6. Optische Anordnung nach einem der vorhergehenden Ansprüche, bei der die Mantelflächen (15) der Ausnehmungen (16) eine Kugelfläche, eine konische Fläche oder eine Freiformfläche bilden.

7. Optische Anordnung nach einem der Ansprüche 5 oder 6, bei der die Mittelachse (11) des Verbindungsabschnitts (12) mindestens eines Spiegelelements (6) unter einem Kippwinkel (βₓ) zur Mittelachse (17) der Mantelfläche (15) ausgerichtet ist.

8. Optische Anordnung nach einem der vorhergehenden Ansprüche, bei welcher das Spiegelelement (6) einen sich an das Kugelsegment (12) anschließenden, bevorzugt zylindrischen Abschnitt (13) aufweist, an dem die Spiegelfläche (F; F2, F3, ...) gebildet ist.

9. Optische Anordnung nach einem der vorhergehenden Ansprüche, bei welcher das Kugelsegment (12) einen Krümmungsradius (R) aufweist, dessen Mittelpunkt (M) auf der Spiegelfläche (F; F2, F3, ...) des Spiegelelements (6) liegt.

10. Optische Anordnung nach einem der vorhergehenden Ansprüche, bei welcher die Mehrzahl von Spiegelelementen (6) auf dem Grundkörper (7) in mehreren Kreisringen (R1, R2, R3) oder in mehreren regelmäßigen Mehrecken (S1, S2, S3) angeordnet ist.

11. Optische Anordnung nach einem der vorhergehenden Ansprüche, bei welcher bei mehr als der Hälfte der Spiegelelemente (6) eine direkte Umlenkung zwischen den Spiegelflächen (F2, F3; F4, F5, ...) von jeweils zwei bevorzugt benachbarten Spiegelelementen (6) entlang einer gemeinsamen Umlenkrichtung (Y) erfolgt.

12. Optische Anordnung nach einem der vorhergehenden Ansprüche, weiter umfassend: einen Endspiegel (9), dessen Spiegelfläche (F36) senkrecht zu dem auf die Spiegelfläche (F36) des Endspiegels (9) treffenden Laserstrahl (5) ausgerichtet ist, so dass der Laserstrahl (5) zu dem scheibenförmigen laseraktiven Medium (2) zurück reflektiert wird.

13. Optische Anordnung nach einem der vorhergehenden Ansprüche, bei welcher der Grundkörper (7) der Umlenkeinrichtung (3) aus einem Material gebildet ist, das zu mindestens 80 Gew.-% mit dem Material der Spiegelelemente (6) übereinstimmt.

14. Optische Anordnung nach einem der vorhergehenden Ansprüche, bei welcher der Grundkörper (7) und/oder die Spiegelelemente (6) aus Glas, bevorzugt aus Quarzglas, aus einer Glaskeramik, oder aus einem metallischen Material, bevorzugt aus einer Legierung, gebildet sind.

15. Optische Anordnung nach einem der vorhergehenden Ansprüche, bei der die stoffschlüssige Verbindung durch eine Klebeverbindung und/oder eine Lötverbindung gebildet ist oder bei der die direkte Verbindung durch eine Schweißverbindung und/oder durch eine Bonding-Verbindung gebildet ist.

## Claims

1. An optical arrangement (1), comprising:
a disk-shaped laser-active medium (2),
a deflecting device (3), having a plurality of mirror elements (6) on which mirror faces (F; F2, F3, F4, F5, ...) for deflecting a laser beam (5) to be amplified are formed, and having a base body (7) on which the mirror elements (6) are fastened, wherein the mirror elements (6) are arranged in pairs, the mirror faces (F3, F4; F5, F6; ...) of which are oriented in such a way that the laser beam (5) to be amplified is deflected by a respective mirror face (F3; F5, ...) via the disk-shaped laser-active medium (2) to another mirror face (F4; F6, ...),
wherein the mirror elements (6) are formed in one piece or are monolithically joined, and have a connecting section (12) which is preferably formed rotationally symmetrically with respect to a center axis (11) and is rigidly, i.e. permanently, connected by a material-fit connection or a direct connection to the base body (7),
**characterized in that**
recesses (16) are formed in the base body (7) which respectively have a lateral face (15) for the material-fit or for direct connection to the connecting section (12) of a respective mirror element (6), and that the connecting section is formed by a spherical segment (12), and that the spherical segment (12) is connected at a spherical cap (14) of the spherical segment (12) with a material fit or directly to the lateral face (15) of the recess (16) of the base body (7).

2. The optical arrangement as claimed in claim 1, wherein the mirror faces (F; F2, F3, ...) of the mirror elements (6) are planar and are oriented at an angle (α) of between 30° and 60° with respect to a center axis (11) of the connecting section (12), which is formed rotationally symmetrically with respect to the center axis (11).

3. The optical arrangement as claimed in claim 1 or 2, wherein for a first mirror element (6) the mirror face (F) is oriented at a first angle (α₁) with respect to a center axis (11) of the connecting section (12), which is formed rotationally symmetrically with respect to the center axis (11), and wherein for a second mirror element (6) the mirror face (F) is oriented at a second angle (α₂), different from the first angle, with respect to the center axis (11) of the connecting section (12).

4. The optical arrangement as claimed in one of the preceding claims, wherein the recesses (16) form holes in the base body (7).

5. The optical arrangement as claimed in one of the preceding claims, wherein the lateral faces (15) of the recesses (16) are formed rotationally symmetrically with respect to a respective center axis (17) of the lateral faces (15).

6. The optical arrangement as claimed in one of the preceding claims, wherein the lateral faces (15) of the recesses (16) form a spherical face, a conical face or a freeform face.

7. The optical arrangement as claimed in one of claims 5 or 6, wherein the center axis (11) of the connecting section (12) of at least one mirror element (6) is oriented at a tilt angle (βₓ) with respect to the center axis (17) of the lateral face (15).

8. The optical arrangement as claimed in one of the preceding claims, wherein the mirror element (6) comprises a preferably cylindrical section (13) which is adjacent to the spherical segment (12) and on which the mirror face (F; F2, F3, ...) is formed.

9. The optical arrangement as claimed in one of the preceding claims, wherein the spherical segment (12) has a radius of curvature (R) whose center point (M) lies on the mirror face (F; F2, F3, ...) of the mirror element (6).

10. The optical arrangement as claimed in one of the preceding claims, wherein the plurality of mirror elements (6) are arranged on the base body (7) in a plurality of circular rings (R1, R2, R3) or in a plurality of regular polygons (S1, S2, S3).

11. The optical arrangement as claimed in one of the preceding claims, wherein for more than half of the mirror elements (6), direct deflection takes place between the mirror faces (F2, F3; F4, F5, ...) of respectively two preferably neighboring mirror elements (6) along a common deflection direction (Y).

12. The optical arrangement as claimed in one of the preceding claims, further comprising: an end mirror (9) whose mirror face (F36) is oriented perpendicularly to the laser beam (5) striking the mirror face (F36) of the end mirror (9), so that the laser beam (5) is reflected back to the disk-shaped laser-active medium (2).

13. The optical arrangement as claimed in one of the preceding claims, wherein the base body (7) of the deflecting device (3) is formed from a material which coincides to at least 80 wt% with the material of the mirror elements (6).

14. The optical arrangement as claimed in one of the preceding claims, wherein the base body (7) and/or the mirror elements (6) are formed from glass, preferably from quartz glass, from a glass ceramic, or from a metallic material, preferably from an alloy.

15. The optical arrangement as claimed in one of the preceding claims, wherein the material-fit connection is formed by an adhesive connection and/or a soldered connection, or wherein the direct connection is formed by a welded connection and/or by a bonding connection.

## Revendications

1. Agencement optique (1), comprenant :
un milieu actif laser en forme de disque (2),
un dispositif de déviation (3) comportant une pluralité d'éléments de miroir (6) sur lesquels sont formées des surfaces réfléchissantes (F ; F2, F3, F4, F5, ...) pour dévier un faisceau laser à amplifier (5), et comportant un corps de base (7) sur lequel les éléments de miroir (6) sont fixés, les éléments de miroir (6) étant disposés en paires dont les surfaces réfléchissantes (F3, F4 ; F5, F6 ; ...) sont orientées de telle sorte que le faisceau laser à amplifier (5) est dévié d'une surface réfléchissante respective (F3 ; F5, ...) vers une autre surface réfléchissante (F4 ;
F6, ...) en passant par le milieu actif laser en forme de disque (2), les éléments de miroir (6) étant réalisés d'une seule pièce ou étant joints de manière monolithique et présentant une partie de liaison (12) de préférence conçue à symétrie de révolution par rapport à un axe central (11), qui est reliée de manière fixe, c'est-à-dire permanente, au corps de base (7) soit par une liaison de matière, soit par une liaison directe,
**caractérisé en ce**
**que** des évidements (16) sont formés dans le corps de base (7), qui présentent chacun une surface extérieure (15) pour la liaison de matière ou directe avec la partie de liaison (12) d'un élément de miroir respectif (6), et que la partie de liaison est formée par un segment sphérique (12) et que le segment sphérique (12) est relié, au niveau d'une calotte sphérique (14) du segment sphérique (12), par liaison de matière ou directement à la surface extérieure (15) de l'évidement (16) du corps de base (7).

2. Agencement optique selon la revendication 1, dans lequel les surfaces réfléchissantes (F ; F2, F3, ...) des éléments de miroir (6) sont planes et sont orientées selon un angle (α) compris entre 30° et 60° par rapport à un axe central (11) de la partie de liaison (12) qui est conçue à symétrie de révolution par rapport à l'axe central (11).

3. Agencement optique selon la revendication 1 ou 2, dans lequel, sur un premier élément de miroir (6), la surface réfléchissante (F) est orientée selon un premier angle (ai) par rapport à un axe central (11) de la partie de liaison (12) qui est conçue à symétrie de révolution par rapport à l'axe central (11), et dans lequel, sur un deuxième élément de miroir (6), la surface réfléchissante (F) est orientée selon un deuxième angle (α₂), différent du premier, par rapport à l'axe central (11) de la partie de liaison (12).

4. Agencement optique selon l'une des revendications précédentes, dans lequel les évidements (16) forment des ouvertures dans le corps de base (7).

5. Agencement optique selon l'une des revendications précédentes, dans lequel les surfaces extérieures (15) des évidements (16) sont conçues à symétrie de révolution par rapport à un axe central respectif (17) des surfaces extérieures (15).

6. Agencement optique selon l'une des revendications précédentes, dans lequel les surfaces extérieures (15) des évidements (16) forment une surface sphérique, une surface conique ou une surface de forme libre.

7. Agencement optique selon l'une des revendications 5 ou 6, dans lequel l'axe central (11) de la partie de liaison (12) d'au moins un élément de miroir (6) est orienté selon un angle d'inclinaison (βₓ) par rapport à l'axe central (17) de la surface extérieure (15).

8. Agencement optique selon l'une des revendications précédentes, dans lequel l'élément de miroir (6) présente une partie (13), de préférence cylindrique, qui se raccorde au segment sphérique (12) et sur laquelle est formée la surface réfléchissante (F ; F2, F3, ...).

9. Agencement optique selon l'une des revendications précédentes, dans lequel le segment sphérique (12) présente un rayon de courbure (R) dont le centre (M) se situe sur la surface réfléchissante (F ; F2, F3, ...) de l'élément de miroir (6).

10. Agencement optique selon l'une des revendications précédentes, dans lequel la pluralité d'éléments de miroir (6) est disposée sur le corps de base (7) en plusieurs anneaux de cercle (R1, R2, R3) ou en plusieurs polygones réguliers (S1, S2, S3).

11. Agencement optique selon l'une des revendications précédentes, dans lequel, dans plus de la moitié des éléments de miroir (6), une déviation directe a lieu entre les surfaces réfléchissantes (F2, F3 ; F4, F5, ...) de deux éléments de miroir (6) de préférence adjacents le long d'une direction de déviation commune (Y).

12. Agencement optique selon l'une des revendications précédentes, comprenant en outre : un miroir d'extrémité (9) dont la surface réfléchissante (F36) est orientée perpendiculairement au faisceau laser (5) frappant la surface réfléchissante (F36) du miroir d'extrémité (9), de sorte que le faisceau laser (5) est réfléchi vers le milieu actif laser en forme de disque (2).

13. Agencement optique selon l'une des revendications précédentes, dans lequel le corps de base (7) du dispositif de déviation (3) est formé d'un matériau qui coïncide pour au moins 80 % en poids avec le matériau des éléments de miroir (6).

14. Agencement optique selon l'une des revendications précédentes, dans lequel le corps de base (7) et/ou les éléments de miroir (6) sont formés de verre, de préférence de verre de quartz, d'une vitrocéramique ou d'un matériau métallique, de préférence d'un alliage.

15. Agencement optique selon l'une des revendications précédentes, dans lequel la liaison de matière est formée par un collage et/ou une brasure ou dans lequel la liaison directe est formée par une soudure et/ou une liaison par métallisation.
